# EUROPÄISCHE PATENTSCHRIFT

(11) **EP 0 376 428 B1**
(45) Veröffentlichungstag und Bekanntmachung des Hinweises auf die Patenterteilung: **28.04.1993**
(21) Anmeldenummer: 89250135.4
(22) Anmeldetag: 29.12.1989
(51) Int. Cl.: B60C 27/14, B60C 27/06

(54) **Gleitschutzvorrichtung für Fahrzeugräder**
Anti-skidding device for vehicle wheels
Système antidérapant pour roues de véhicule

(30) Priorität: 30.12.1988 DE 3844496
(43) Veröffentlichungstag der Anmeldung: 04.07.1990
(73) Patentinhaber: RUD-KETTENFABRIK RIEGER & DIETZ GMBH U. CO., 73432 Aalen (DE)
(72) Erfinder: Zeiser, Peter, Dipl.-Ing., D-7080 Aalen-Wasseralfingen (DE)
(74) Vertreter: Böning, Manfred, Dr.-Ing.

(56) Entgegenhaltungen:
- EP-A- 0 110 838
- WO-A-84/04071
- DE-A- 3 545 529
- FR-A- 2 350 975
- FR-A- 2 464 835
- US-A- 2 601 882
- PATENT ABSTRACTS OF JAPAN vol. 13, no. 473 (M-884)(3821) 26 Oktober 1989; & JP-A-1186406 (Sanden Shoji K.K.) 25 Juli 1989

## Beschreibung

Die Erfindung betrifft eine Gleitschutzvorrichtung für Fahrzeugräder mit einer über mindestens eine Feder mit der Felge des Fahrzeugrades verbindbaren Halterung, die im montierten Zustand Drehbewegungen gegenüber dem Fahrzeugrad ausführen kann und die mit mehreren in speichenartig ausgebildeten, an der Radaußenseite zu liegen kommenden Haltearmen versehen ist, mit deren der Halterung abgewandten Enden Teile eines geschlossenen, hinsichtlich seiner Länge an den Radumfang anpaßbaren Laufnetzes verbunden sind, das aus einer Vielzahl beweglich miteinander verbundener Elemente besteht und von den Haltearmen in den Bereich der Lauffläche gedrückt und dort gehalten wird.

Aus der DE-A-35 45 529 ist eine Gleitschutzvorrichtung der vorstehenden Art mit vier Haltearmen bekannt, von denen jeweils zwei parallel zueinander, in einer mit Führungskanälen versehenen Halterung hin- und herverschiebbar gelagert sind. Bei montierter Gleitschutzvorrichtung schließen benachbarte Haltearme jeweils einen Winkel von 90° zueinander ein und erstrecken sich mit ihrem größten Teil radial von der Halterung nach außen. Um den Platzbedarf der nicht montierten Gleitschutzvorrichtung im Kofferraum eines Fahrzeuges in vertretbaren Grenzen zu halten, lassen sich einerseits die Haltearme eines jeden Haltearmpaares in den Führungskanälen nach innen verschieben, bis sie auf dem größten Teil ihrer Länge nebeneinander zu liegen kommen, und ist es andererseits möglich, die Haltearme durch eine Schwenkbewegung in eine in erster Näherung parallele Position zu überführen. Es versteht sich, daß die Haltearme vor der Montage der Gleitschutzvorrichtung aus der vorstehend geschilderten Aufbewahrungsstellung wieder in die Lage überführt werden müssen, die sie im montierten Zustand einnehmen, denn nur so kann ein Teil des geschlossenen Laufnetzes von der Außenseite des Fahrzeugrades korb- oder käfigartig über dessen außerhalb der Bodenaufstandsfläche liegende Lauffläche gestülpt werden. Beim Montagevorbereitungsprozeß müssen die Haltearme der Haltearmpaare folglich vom Zentrum der Halterung nach außen gezogen und anschließend in eine 90°-Winkelabstandsposition überführt werden. Abgesehen davon, daß diese Art der Montagevorbereitung ebenso wie der zuvor geschilderte, dem Verstauen vorausgehende Prozeß gewisse Unbequemlichkeiten mit sich bringt, erfordert die Führung der Haltearme bei der bekannten Vorrichtung einen nicht unerheblichen Aufwand, der die Verwendung von mehr als vier Haltearmen praktisch unmöglich macht, aber auch eine nichtpaarige Anordnung von Haltearmen, d.h. beispielsweise in Abhängigkeit von der Reifengröße die Verwendung von drei oder fünf Haltearmen, äußerst schwierig gestalten würde.

Bekannt ist außerdem aus der FR-A-2 464 835 eine Gleitschutzvorrichtung mit einer von einer Spannvorrichtung gebildeten zentralen Halterung, welche Auslegerarme aufweist, mit denen sich den Reifen hintergreifende Gleitschutzbügel verbinden lassen. Die Verbindungsorgane sind dabei so ausgestaltet, daß die Gleitschutzbügel Schwenkbewegungen um zur Fahrzeugradachse parallele Achsen ausführen können. Nach dem Überstülpen der Gleitschutzbügel über den Reifen werden die Gleitschutzbügel dieser Gleitschutzvorrichtung durch mindestens einen mit Druckluft betätigbaren Kolben zur Radachse gezogen und fest auf die Lauffläche des Reifens gedrückt. Um diese zweite bekannte Gleitschutzvorrichtung bei Nichtgebrauch halbwegs platzsparend unterbringen zu können, kommt ihr Benutzer um eine Trennung der Gleitschutzbügel von der Halterung nicht herum. Entsprechendes gilt für eine weitere aus der US-A-2 601 882 bekannte Gleitschutzvorrichtung, bei der die Halterung wiederum eine Spannvorrichtung bildet, durch die über den Reifen gestülpte Gleitschutzbügel radial zum Radzentrum und auf die Lauffläche gezogen werden. In diesem Falle weist die Halterung am Umfang eine Reihe schwenkbarer Haken auf, in die mit Schlitzen versehene Enden der Gleitschutzbügel einhängbar sind. Beide zuletzt beschriebenen Gleitschutzvorrichtungen schließen im Hinblick auf ihren Aufbau eine automatische Restmontage, wie sie bei gattungsgemäßen Gleitschutzvorrichtungen praktiziert wird, aus.

Der Erfindung liegt die Aufgabe zugrunde, eine Gleitschutzvorrichtung der in Betracht gezogenen Gattung zu schaffen, die nicht nur einen geringen Stauraum beansprucht, sondern bei einfacher Bauweise und größerer Variabilität hinsichtlich der Zahl ihrer Haltearme auch schnell und bequem aus ihrer Aufbewahrungsstellung in die Montagestellung und umgekehrt überführt werden kann.

Diese Aufgabe wird erfindungsgemäß dadurch gelöst, daß die Haltearme dergestalt gelenkig mit der Halterung verbunden sind, daß sie aus einer durch Anschläge an der Halterung definierten Montagestellung von der Halterung weg in eine Aufbewahrungsstellung zusammenklappbar sind.

Die erfindungsgemäße Gleitschutzvorrichtung läßt sich ähnlich wie ein Schirm mit einem Handgriff betriebsbereit machen oder zusammenklappen. Bei der Montagevorbereitung erfaßt man die Gleitschutzvorrichtung zweckmäßigerweise an zwei Stellen ihres Laufnetzes oder an den dem Laufnetz zugewandten Enden zweier Haltearme. Zum Verstauen dagegen erfaßt man sie im Bereich ihres Zentrums, d.h. an der Halterung. Im ersten Fall bewirkt das geschlossene Laufnetz unter der Einwirkung der Schwerkraft ein schirmartiges Auseinanderspreizen, im zweiten ein entsprechendes Zusammenklappen der Haltearme. Die Verwendung ungerader Haltearmzahlen ist problemlos möglich.

Die Erfindung wird im folgenden anhand der beigefügten, bevorzugte Ausführungsbeispiele darstellenden Zeichnung näher erläutert. Es zeigen:
- Fig. 1: die perspektivische Ansicht einer auf ein Fahrzeugrad montierten Gleitschutzvorrichtung mit vier Haltearmen,

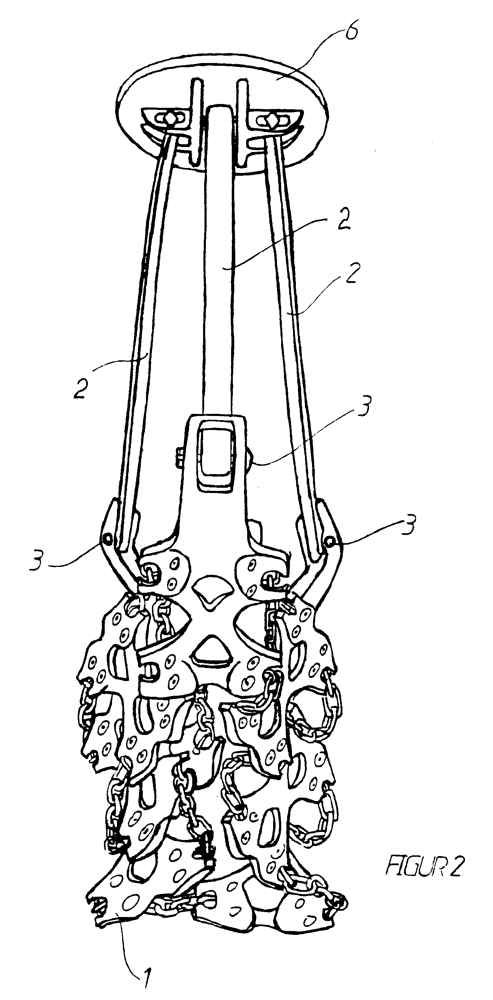

- Fig. 2: die zur Aufbewahrung zusammengeklappte Gleitschutzvorrichtung gemäß Fig. 1,
- Fig. 3: in vergrößertem Maßstab den Anschluß der Haltearme an der Halterung der Gleitschutzvorrichtung gemäß den Figuren 1 und 2 in Richtung der Pfeile III-III in Fig. 4 betrachtet,
- Fig. 4: einen Schnitt durch die Halterung und weitere Einzelheiten der Vorrichtung gemäß den Figuren 1 und 2,
- Fig. 5: einen Schnitt längs der Linie V-V in Fig. 3 und
- Fig. 6: einen der Fig. 4 entsprechenden Schnitt durch eine modifizierte Halterung.

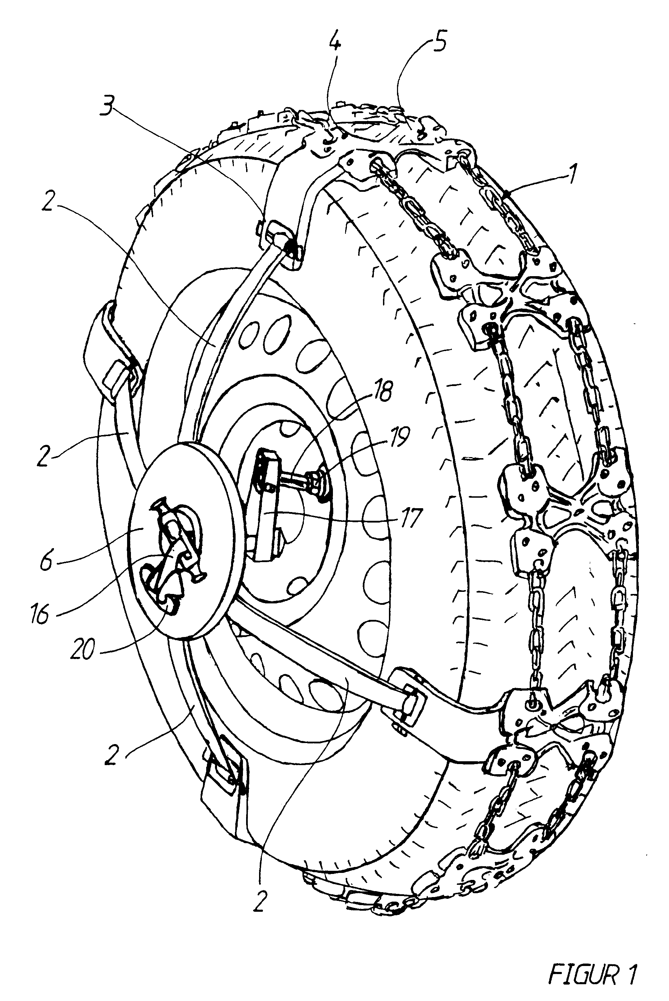

In Fig. 1 ist 1 das Laufnetz einer Gleitschutzvorrichtung, das einen geschlossenen Ring aus einer Vielzahl von gelenkig miteinander verbundenen Teilen bildet. Das Laufnetz 1 wird von vier Haltearmen 2 gehalten, deren äußere Enden über Scharniere 3 mit Spikes 4 tragenden Gleitschutzelementen 5 in Verbindung stehen. An ihrer dem Laufnetz 1 abgewandten Seite sind die Haltearme 2 gelenkig an einer zentralen Halterung 6 gelagert.

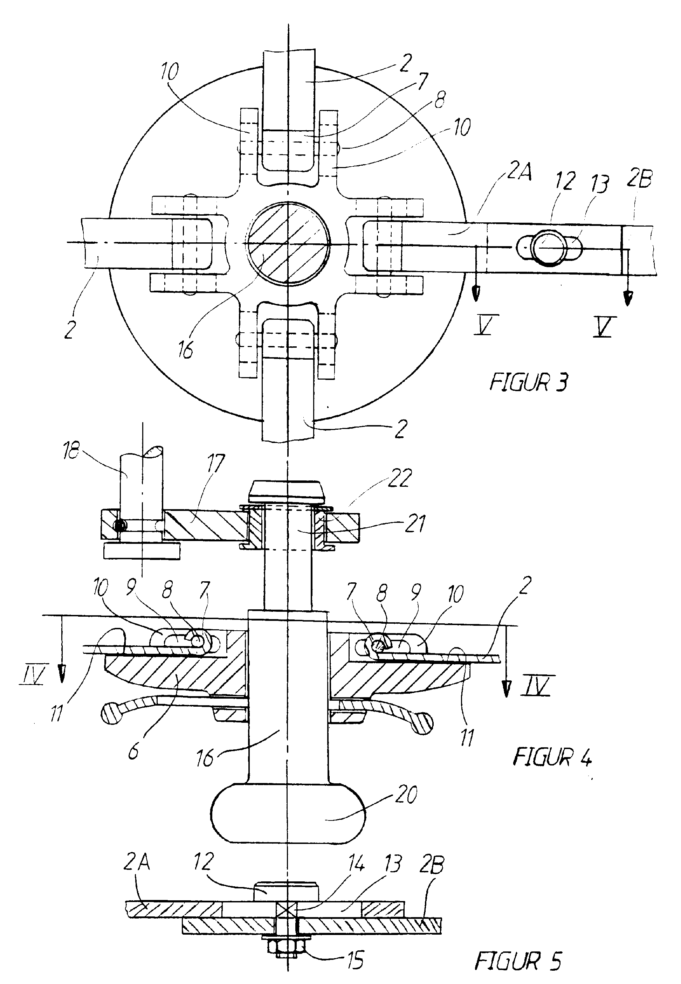

Einzelheiten der gegenüber einer Lagerung in Führungskanälen erheblich einfacheren gelenkigen Lagerung der Haltearme 2 zeigen die Figuren 3 und 4. Die aus flachen Federstahlstäben gebildeten Haltearme 2 umschließen mit ihren eingerollten Enden 7 Haltezapfen 8, deren beidseits über die Haltearme 2 vorstehende Enden in als Langlöcher ausgebildete Führungsnuten 9 in Führungsstegen 10 greifen. Die Führungsstege 10 bilden seitliche Führungen für im Bereich der Halterung 6 gelegene Abschnitte der Haltearme. Sie formen darüber hinaus Seitenwände von Führungstaschen, deren Böden 11 den Schwenkweg der Haltearme 2 begrenzende Anschläge bilden. Aufgrund der Führung der Haltezapfen 8 in den Führungsnuten 9 können die Haltearme 2 durch von den Enden der Führungsnuten 9 gebildete Anschläge begrenzte Radialbewegungen ausführen, wenn ihre dem Laufnetz 1 zugewandten Enden den Winkelbereich der Bodenaufstandsfläche des Fahrzeugrades passieren.

Zur Erhöhung der Anpassungsfähigkeit der Gleitschutzvorrichtung an Fahrzeugräder mit unterschiedlichen Durchmessern ist es zweckmäßig, daß nicht nur die Länge ihres geschlossenen Laufnetzes 1, sondern auch die Länge der Haltearme 2 veränderbar ist. Am Beispiel eines einzelnen Haltearmes ist im rechten Teil der Figur 3 und in Figur 5 eine Möglichkeit zur Längenänderung der Haltearme 2 dargestellt. Die Figur 5 zeigt zwei Haltearmteile 2A und 2B, die an der Teilungsstelle durch eine Schraube 12 mit einem in einem Langloch 13 geführten Vierkant 14 und eine Mutter 15 miteinander verbunden sind.

Die Halterung ist über eine Spannfeder 16 und ein Anschlußteil 17 am Fahrzeugrad befestigt. Die im dargestellten Fall aus Gummi oder einem gummielastischen Material bestehende Spannfeder 16 sorgt nicht nur dafür, daß beim Anfahren der sich nach dem Auflegen des Laufnetzes auf das Fahrzeugrad noch im Bereich der Bodenaufstandsfläche befindliche Teil des Laufnetzes auf die Lauffläche des Reifens gezogen wird, sondern gewährleistet auch in kritischen Situationen, wie sie beispielsweise bei einer schnellen Kurvenfahrt auftreten können, den Verbleib des Laufnetzes 1 auf der Lauffläche des Reifens. Die Verwendung eines Anschlußteiles 17 mit einem einzigen Befestigungselement 18, das sich mit einer Radschraube 19 oder einer Radmutter verbinden läßt, erleichtert nicht nur die Vorbereitung der Gleitschutzkette zur Montage, sondern auch deren Montage selbst. Nach dem Verbinden des Befestigungselementes 18, sie es nun durch einen Steck-, Schraub- oder anderen Kupplungsvorgang, mit der Radschraube 19 braucht der Benutzer der Gleitschutzvorrichtung lediglich noch die Spannfeder 16 mittels eines im Zentrum der Halterung gelegenen einzigen Betätigungsorganes 20 zu spannen und in der Spannstellung - wie in Fig. 1 angedeutet - zur arretieren, um anschließend anfahren und so den automatischen Restmontagevorgang einleiten zu können. Zur Sicherung der Drehbeweglichkeit der Halterung 6 gegenüber dem Fahrzeugrad ist das Ende 21 der Spannfeder 16 drehbar in einem aus zwei Schalen bestehenden Lager 22 im Anschlußteil 17 gelagert.

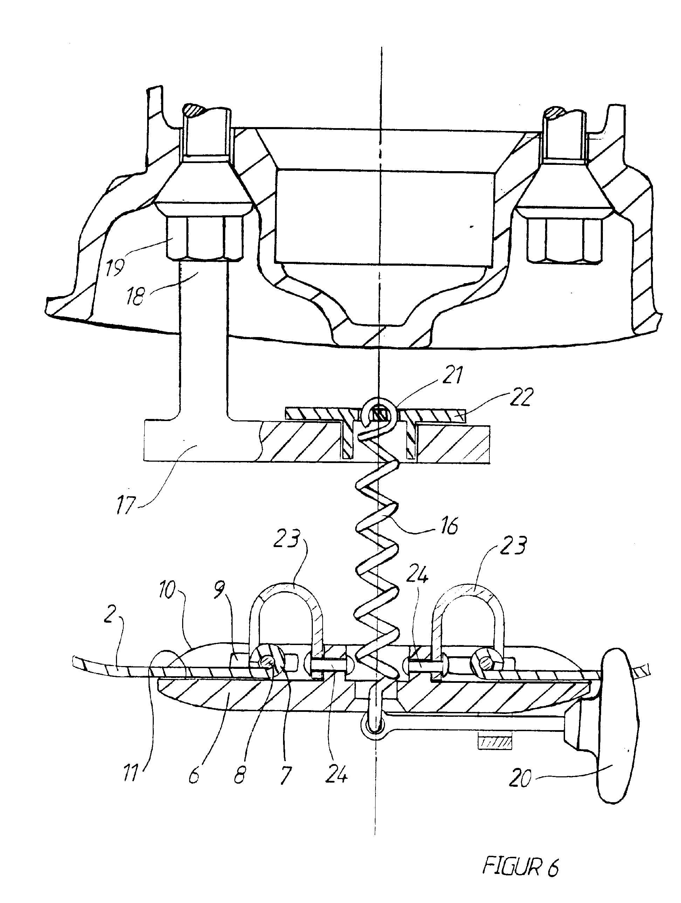

Figur 6 zeigt eine Abwandlung der in Fig. 4 dargestellten Konstruktion, wobei für einander entsprechende Teile gleiche Bezugsziffern verwendet wurden, so daß sich eine nochmalige detaillierte Beschreibung erübrigt. Im Gegensatz zum ersten Ausführungsbeispiel sind in diesem Fall die an den Enden 7 der Haltearme 2 angeordneten Haltezapfen 8 nicht frei beweglich in Führungsnuten 9 geführt, sondern zusätzlich über Scharnierteile bildende Federn 23 mit der Halterung 6 verbunden. Die Federn 23 bilden zusammen mit dem Haltezapfen 8 und den eingerollten Enden 7 der Haltearme 2 U-förmige, beispielsweise mittels Nieten 24 an der Halterung 6 befestigte Federscharniere,welche schlagartigen Beanspruchungen der Haltearme 2 und der zu ihrer Verbindung mit der Halterung 6 dienenden Teile entgegenwirken.

## Patentansprüche

1. Gleitschutzvorrichtung für Fahrzeugräder mit einer über mindestens eine Feder mit der Felge des Fahrzeugrades verbindbaren Halterung (6), die im montierten Zustand Drehbewegungen gegenüber dem Fahrzeugrad ausführen kann und die mit mehreren in speichenartig ausgebildeten, an der Radaußenseite zu liegen kommenden Haltearmen (2) versehen ist, mit deren der Halterung (6) abgewandten Enden Teile eines geschlossenen, hinsichtlich seiner Länge an den Radumfang anpaßbaren Laufnetzes (1) verbunden sind, das aus einer Vielzahl beweglich miteinander verbundener Elemente besteht und von den Haltearmen (2) in den Bereich der Lauffläche gedrückt und dort gehalten wird, dadurch **gekennzeichnet,** daß die Haltearme (2) dergestalt gelenkig mit der Halterung (6) verbunden sind, daß sie aus einer durch Anschläge (11) an der Halterung (6) definierten Montagestellung von der Halterung (6) weg in eine Aufbewahrungsstellung zusammenklappbar sind.

2. Gleitschutzvorrichtung nach Anspruch 1, dadurch gekennzeichnet, daß die dem Laufnetz (1) abgewandten Enden (7) der Haltearme (2) in Radialrichtung hin- und herbewegbar an der Halterung (6) gelagert sind.

3. Gleitschutzvorrichtung nach Anspruch 1 oder 2, dadurch gekennzeichnet, daß die dem Laufnetz (1) abgewandten Enden (7) der Haltearme (2) mit in Führungsnuten (9) geführten Haltezapfen (8) versehen sind.

4. Gleitschutzvorrichtung nach einem der Ansprüche 1 bis 3, dadurch gekennzeichnet, daß die Enden (7) der Haltearme (2) über Federn (23) mit der Halterung (6) verbunden sind.

5. Gleitschutzvorrichtung nach Anspruch 4, dadurch gekennzeichnet, daß die Federn (23) als Scharnierteile ausgebildet sind.

6. Gleitschutzvorrichtung nach Anspruch 4 oder 5, dadurch gekennzeichnet, daß der Federweg der Federn (23) durch Anschläge begrenzt ist.

7. Gleitschutzvorrichtung nach einem der Ansprüche 4 bis 6, dadurch gekennzeichnet, daß die Enden von Haltezapfen (8), über die die Haltearme (2) mit den Federn (23) verbunden sind, in Führungsnuten ragen.

8. Gleitschutzvorrichtung nach Anspruch 6 und 7, dadurch gekennzeichnet, daß die Enden der Führungsnuten (9) die Anschläge bilden.

9. Gleitschutzvorrichtung nach einem der Ansprüche 4 bis 8, dadurch gekennzeichnet, daß die Federn (23) im wesentlichen U- oder Ω-förmig ausgebildet sind.

10. Gleitschutzvorrichtung nach einem der Ansprüche 1 bis 9, dadurch gekennzeichnet, daß die Halterung (6) mit Führungsstegen (10) zur seitlichen Führung von im Bereich der Halterung (6) gelegenen Abschnitten der Haltearme (2) versehen ist.

11. Gleitschutzvorrichtung nach einem der Ansprüche 1 bis 10, dadurch gekennzeichnet, daß die Halterung (6) mit zur Radseite und in Radialrichtung offenen Führungstaschen für im Bereich der Halterung (6) gelegene Abschnitte der Haltearme (2) versehen ist.

12. Gleitschutzvorrichtung nach Anspruch 12, dadurch gekennzeichnet, daß die Böden (11) der Führungstaschen die den Schwenkweg der Haltearme (2) begrenzenden Anschläge bilden.

13. Gleitschutzvorrichtung nach einem der Ansprüche 1 bis 12, dadurch gekennzeichnet, daß jeder Haltearm (2) aus mindestens zwei ein Einstellen seiner Länge erlaubenden Teilen (2A,2B) besteht.

14. Gleitschutzvorrichtung nach einem der Ansprüche 1 bis 13, dadurch gekennzeichnet, daß die Halterung (6) mittels einer Spannfeder (16) unverlierbar mit einem zu ihrer Befestigung am Fahrzeugrad dienenden Anschlußteil (17) verbunden ist.

15. Gleitschutzvorrichtung nach Anspruch 14, dadurch gekennzeichnet, daß das Anschlußteil (17) mit einem Befestigungselement (18) ausgestattet ist, das mit einer einzelnen Radschraube (19) oder Radmutter verbindbar ist.

16. Gleitschutzvorrichtung nach Anspruch 14 oder 15, dadurch gekennzeichnet, daß im Zentrum der Halterung (6) ein Betätigungsorgan (20) zum Spannen der Spannfeder (16) angeordnet ist.

## Claims

1. Anti-skidding device for vehicle wheels, having a holding device (6) which can be connected to the rim of the vehicle wheel via at least one spring, in the mounted condition can perform rotary movements relative to the vehicle wheel and is provided with a plurality of retention arms (2), which are of spoke-like design, come to rest against the outside of the wheel and to the ends of which facing away from the holding device (6) parts of a continuous interlinked tread arrangement (1), the length of which can be adapted to the wheel circumference, are connected, the said arrangement comprising a multiplicity of elements connected movably to one another and being pressed into the region of the tread surface and held there by the retention arms (2), characterised in that the retention arms (2) are connected to the holding device (6) in a manner articulated such that they can be folded up out of a mounted position defined by stops (11) on the holding device (6) into a storage position.

2. Anti-skidding device according to Claim 1, characterised in that those ends (7) of the retention arms (2) which face away from the interlinked tread arrangement (1) are mounted on the holding device (6) in a manner which allows them to be moved backwards and forwards in the radial direction.

3. Anti-skidding device according to Claim 1 or 2, characterised in that those ends (7) of the retention arms (2) which face away from the interlinked tread arrangement (1) are provided with retention pins (8) guided in guide grooves (9).

4. Anti-skidding device according to one of Claims 1 to 3, characterised in that the ends (7) of the retention arms (2) are connected to the holding device (6) via springs (23).

5. Anti-skidding device according to Claim 4, characterised in that the springs (23) are designed as hinge parts.

6. Anti-skidding device according to Claim 4 or 5, characterised in that the spring travel of the springs (23) is limited by stops.

7. Anti-skidding device according to one of Claims 4 to 6, characterised in that the ends of retention pins (8) via which the retention arms (2) are connected to the springs (23) project into guide grooves.

8. Anti-skidding device according to Claim 6 and 7, characterised in that the ends of the guide grooves (9) form the stops.

9. Anti-skidding device according to one of Claims 4 to 8, characterised in that the springs (23) are of essentially U- or Ω-shaped design.

10. Anti-skidding device according to one of Claims 1 to 9, characterised in that the holding device (6) is provided with guide webs (10) for the lateral guidance of sections of the retention arms (2) which are situated in the region of the holding device (6).

11. Anti-skidding device according to one of Claims 1 to 10, characterised in that the holding device (6) is provided with guide pockets, open towards the wheel and in the radial direction, for sections of the retention arms (2) which are situated in the region of the holding device (6).

12. Anti-skidding device according to Claim 12, characterised in that the bases (11) of the guide pockets form the stops which limit the pivoting travel of the retention arms (2).

13. Anti-skidding device according to one of Claims 1 to 12, characterised in that each retention arm (2) comprises at least two parts (2A, 2B) permitting adjustment of its length.

14. Anti-skidding device according to one of Claims 1 to 13, characterised in that the holding device (6) is connected non-detachably by means of a clamping spring (16) to a connection part (17) serving to fix it on the vehicle wheel.

15. Anti-skidding device according to Claim 14, characterised in that the connection part (17) is equipped with a fixing element (18), which can be connected to an individual wheel bolt (19) or wheel nut.

16. Anti-skidding device according to Claim 14 or 15, characterised in that an actuating member (20) for tensioning the clamping spring (16) is arranged in the centre of the holding device (6).

## Revendications

1. Dispositif antidérapage, pour roue de véhicule automobile, comprenant une fixation (6) qui est agencée de façon à pouvoir être reliée à la jante de la roue de véhicule par l'intermédiaire d'au moins un ressort et peut exécuter, à l'état monté, des mouvements de rotation vis-à-vis de la roue de véhicule et qui est pourvue de plusieurs bras de maintien (2) disposés à la façon de rayons et venant en appui sur le flanc extérieur de la roue, tandis que des parties d'un réseau de roulement (1), fermé et adaptable en longueur au contour périphérique de la roue, sont reliées aux extrémités de ces bras de maintien (2) qui sont situées à l'opposé de la fixation (6), ce réseau de roulement (1) étant constitué de multiples éléments reliés entre eux d'une manière mobile et étant appliqué en appui dans la zone de la bande d'usure, et maintenu dans cette zone, par les bras de maintien (2), caractérisé en ce que les bras de maintien (2) sont reliés de manière articulée à la fixation (6) de façon à pouvoir être repliables les uns sur les autres à partir de la fixation (6), d'une position de montage, définie par des butées (11) situées sur la fixation (6), à une position de rangement.

2. Dispositif antidérapage suivant la revendication 1, caractérisé en ce que les extrémités (7) des bras de maintien (2) qui sont situées à l'opposé du réseau de roulement (1) sont montées sur la fixation (6) de façon à pouvoir être déplacées dans un sens et dans l'autre suivant la direction radiale.

3. Dispositif antidérapage suivant l'une quelconque des revendications 1 et 2, caractérisé en ce que les extrémités (7) des bras de maintien (2) qui sont situées à l'opposé du réseau de roulement (1) sont pourvues d'axes de maintien (8) guidés dans des rainures de guidage (9).

4. Dispositif antidérapage suivant l'une quelconque des revendications 1 à 3, caractérisé en ce que les extrémités (7) des bras de maintien (2) sont reliées à la fixation (6) par l'intermédiaire de ressorts (23).

5. Dispositif antidérapage suivant la revendication 4, caractérisé en ce que les ressorts (23) sont réalisés sous la forme d'éléments de charnière.

6. Dispositif antidérapage suivant l'une quelconque des revendications 4 et 5, caractérisé en ce que la course élastique des ressorts (23) est limitée par des butées.

7. Dispositif antidérapage suivant l'une quelconque des revendications 4 à 6, caractérisé en ce que les extrémités des axes de maintien (8), par lesquelles les bras de maintien (2) sont reliés aux ressorts (23), sont engagées dans des rainures de guidage.

8. Dispositif antidérapage suivant la revendication 7 lorsqu'elle dépend de la revendication 6, caractérisé en ce que les extrémités des rainures de guidage (9) constituent les butées.

9. Dispositif antidérapage suivant l'une quelconque des revendications 4 à 8, caractérisé en ce que les ressorts (23) sont réalisés essentiellement en forme de U ou de Ω.

10. Dispositif antidérapage suivant l'une quelconque des revendications 1 à 9, caractérisé en ce que la fixation (6) est pourvue de nervures de guidage (10) servant à guider latéralement des parties des bras de maintien (2) qui sont situées dans la zone de la fixation (6).

11. Dispositif antidérapage suivant l'une quelconque des revendications 1 à 10, caractérisé en ce que la fixation (6) est pourvue de poches de guidage ouvertes du côté de la roue et suivant la direction radiale et destinées à des parties des bras de maintien (2) qui sont situées dans la zone de la fixation (6).

12. Dispositif antidérapage suivant la revendication 11, caractérisé en ce que les fonds (11) des poches de guidage constituent les butées limitant la course de basculement des bras de maintien (2).

13. Dispositif antidérapage suivant l'une quelconque des revendications 1 à 12, caractérisé en ce que chaque bras de maintien (2) est constitué d'au moins deux éléments (2A, 2B) permettant un réglage de sa longueur.

14. Dispositif antidérapage suivant l'une quelconque des revendications 1 à 13, caractérisé en ce que la fixation (6) est reliée de manière imperdable, à l'aide d'un ressort de traction (16), à une pièce de raccordement (17) servant à sa fixation sur la roue de véhicule.

15. Dispositif antidérapage suivant la revendication 14, caractérisé en ce que la pièce de raccordement (17) est pourvue d'un élément de fixation (18) qui est agencé de façon à pouvoir être relié à un boulon particulier de fixation de roue (19) ou un écrou particulier de fixation de roue.

16. Dispositif antidérapage suivant l'une quelconque des revendications 14 et 15, caractérisé en ce qu'au centre de la fixation (6), il est disposé un organe d'actionnement (20) servant à tendre le ressort de traction (16).
